# EUROPÄISCHE PATENTANMELDUNG

(11) **EP 0 522 420 A2**
(43) Veröffentlichungstag der Anmeldung: **13.01.1993**
(21) Anmeldenummer: 92111067.2
(22) Anmeldetag: 30.06.1992
(51) Int. Cl.: C08J 3/03, C08F 299/06, C08G 18/10, C09D 175/04, C08G 18/08, C08G 18/67

(54) **Polyurethan-Dispersionen**

(30) Priorität: 05.07.1991 DE 4122266
(71) Anmelder: HOECHST AKTIENGESELLSCHAFT, D-65926 Frankfurt am Main (DE)
(72) Erfinder: Klein, Heinz-Peter, Dr., W-6500 Mainz-Laubenheim (DE); Schafheutle, Markus A., Dr., W-6203 Hochheim (DE); Walz, Gerhard, Dr., W-6200 Wiesbaden (DE)

(57) **Zusammenfassung**

Polyurethan-Dispersionen hergestellt durch radikalisch initiierte Polymerisation von Polyurethan-Makromonomeren mit einem Gehalt an Carboxyl-, Phosphonsäure- oder Sulfonsäuregruppen, terminalen Vinylgruppen, sowie gegebenenfalls Urethan-, Thiourethan- oder Harnstoffgruppen, wobei sich die terminalen Vinylgruppen nicht von Hydroxyalkyl(meth)acrylaten herleiten.

Diese Polyurethan-Dispersionen eignen sich zur Herstellung von Überzügen auf Substraten, als Klebemittel oder als Bindemittel in Druckfarben.

## Beschreibung

In EP 98 752 sind wäßrige Polyurethan-Dispersionen beschrieben. Diese Polyurethan-Dispersionen werden hergestellt, indem zunächst ein Diol, das ionische Gruppen enthält, ein Polyol-polyether oder Polyol-polyester und ein Überschuß eines Diisocyanats unter Bildung eines Präpolymeren umgesetzt werden. In der zweiten Stufe wird dieses Präpolymere, das freie Isocyanatgruppen enthält, dann mit einem Hydroxyalkyl(meth)acrylat umgesetzt. Man erhält dabei ein zweites Präpolymer, das Vinylgruppen enthält und dieses Präpolymer wird dann zum Schluß in wäßriger Dispersion mit Radikale bildenden Initiatoren polymerisiert. Bei den hier beschriebenen Polyurethanen wird die Vinylgruppe ausschließlich durch den Einbau von Hydroxy-C₂-C₄-alkyl(meth)acrylaten erreicht. Der Einbau von anderen Monomeren zur Bildung von Vinylgruppen ist dort nicht erwähnt.

Gegenstand der vorliegenden Erfindung sind Polyurethan-Dispersionen, hergestellt durch radikalisch initiierte Polymerisation von Polyurethan-Makromonomeren mit einem Gehalt an Carboxyl-, Phosphonsäure- oder Sulfonsäuregruppen, terminalen Vinylgruppen, sowie gegebenenfalls Urethan-, Thiourethan- und/oder Harnstoffgruppen, wobei sich die terminalen Vinylgruppen nicht von Hydroxy-C₂-C₄-alkyl(meth)acrylaten herleiten.
Diese Polyurethan-Makromonomere können durch Polyaddition von Polyhydroxy-Verbindungen aus der Gruppe Polyhydroxy-polyether, Polyhydroxy-polyester oder Polyhydroxy-polycarbonate, weiterhin Polyhydroxycarbonsäuren, Polyhydroxyphosphonsäuren oder Polyhydroxysulfonsäuren und Polyisocyanaten hergestellt werden.

Die Mengenverhältnisse werden dabei so gewählt, daß das Polyisocyanat im Überschuß vorliegt, sodaß das entstehende Präpolymer neben den Carboxyl-, Phosphonsäure- bzw. Sulfonsäuregruppen noch freie Isocyanatgruppen enthält. Bevorzugt kann man auch so vorgehen, daß man zunächst das Polyisocyanat im Unterschuß einsetzt, um so ein Präpolymer mit freien Hydroxylgruppen zu erhalten. In einer zusätzlichen Stufe wird dieses Präpolymer dann mit weiterem Polyisocyanat umgesetzt, um so ebenfalls ein Präpolymer mit freien Isocyanatgruppen zu erhalten.

Diese Präpolymere werden dann weiter mit einem Monomeren umgesetzt, das außer mindestens einer Vinylgruppe noch eine Gruppe enthält, die mit Isocyanatgruppen reagiert, wie etwa die Hydroxyl-, Amino- oder Mercaptogruppe. Beispiele hierfür sind Umsetzungsprodukte aus Monoepoxiden und α, β-ungesättigten Carbonsäuren wie etwa Reaktionsprodukte aus Versaticsäureglycidylester und (Meth)acrylsäure oder 2-Ethylhexylglycidylether und (Meth)acrylsäure, Umsetzungsprodukte aus α, β-ungesättigten Glycidylestern bzw. -ethern mit Monocarbonsäuren, beispielsweise Reaktionsprodukte aus Glycidylmethacrylat und Stearinsäure oder Leinölfettsäure und fernerhin (Meth)acrylate mit Aminogruppen, wie z.B. t-Butylaminoethylmethacrylat.

Diese Monomeren können allein verwendet werden, es ist aber auch möglich, diese Monomeren im Gemisch mit primären oder sekundären Aminen, Alkoholen oder Thioalkoholen einzusetzen. Auf diese Weise erhält man ein Makromonomer, das terminale Vinylgruppen enthält. Dieses Makromonomer wird dann in der letzten Stufe über die Vinylgruppen mit radikalbildenden Initiatoren polymerisiert.

Als Polyhydroxy-polyether kommen Verbindungen der Formel

H -[ O - (CHR)ₙ ]ₘ- OH

in Frage, in der
- R: Wasserstoff oder ein niedriger Alkylrest, gegebenenfalls mit verschiedenen Substituenten, ist,
- n: eine Zahl von 2 bis 6 und
- m: eine Zahl von 10 bis 120 ist.
Beispiele sind Poly(oxytetramethylen)glykole, Poly(oxyethylen)glykole und Poly(oxypropylen)glykole.

Die bevorzugten Polyhydroxypolyether sind Poly(oxypropylen)glykole mit einem Molekulargewicht im Bereich von 400 bis 5000.

Die Polyhydroxy-polyester werden hergestellt durch Veresterung von organischen Polycarbonsäuren oder ihren Anhydriden mit organischen Polyolen. Die Polycarbonsäuren und die Polyole können aliphatische oder aromatische Polycarbonsäuren und Polyole sein.

Die zur Herstellung verwendeten Polyole schließen Alkylenglykole wie Ethylenglykol, Butylenglykol, Hexandiol-1,6, Neopentylglykol und andere Glykole, wie z.B. Dimethylolcyclohexan, 2,2-Bis(4-hydroxycyclohexyl)propan sowie Trishydroxyalkylalkane, wie z.B. Trimethylolpropan und Tetrakishydroxyalkylalkane, wie z.B. Pentaerythrit ein.

Die Säurekomponente des Polyesters besteht in erster Linie aus niedermolekularen Polycarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebazinsäure, Maleinsäure, Glutarsäure, Hexachlorheptandicarbonsäure, Alkyl- und Alkenylbernsteinsäure, wie z.B. n-Octenylbernsteinsäure sowie n- oder iso-Dodecenylbernsteinsäure, Tetrachlorphthalsäure, Trimellitsäure und Pyromellitsäure. Anstelle dieser Säuren können auch ihre Anhydride, soweit diese existieren, verwendet werden. Als Polycarbonsäuren lassen sich auch Dimer- und Trimerfettsäuren einsetzen.

Unter den Begriffen Polyhydroxy-polyether und Polyhydroxy-polyester sind auch solche Produkte dieser Art zu verstehen, die Monomeren mit Carboxyl-, Sulfonat-, oder Phosphonatgruppen enthalten.

Ferner lassen sich bei der Erfindung auch Polyhydroxy-polyester, die sich von Lactonen ableiten benutzen. Diese Produkte erhält man beispielsweise durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 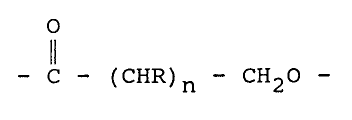
entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeinen Formel dargestellt werden: 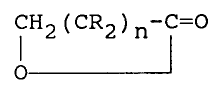
in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Ethylenglykol, 1,3-Propandiol, 1,4-Butandiol, Hexandiol-1,6, Dimethylolcyclohexan, Trimethylolpropan und Pentaerythrit.

Als Ausgangsverbindungen kommen weiterhin Polycarbonat-polyole bzw. Polycarbonat-diole in Frage, die der allgemeinen Formel 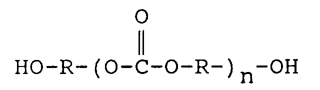
entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Di-ethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit mit Dicarbonaten, wie Dimethyl-, Diethyl- oder Di-phenylcarbonat, oder Phosgen herstellen. Gemische solcher Polyole können ebenfalls eingesetzt werden.

Die zuvor beschriebenen Polyhydroxy-polyether, Polyhydroxy-polyester und Polyhydroxy-polycarbonate können gemeinsam eingesetzt werden. Darüberhinaus können diese Polyhydroxyverbindungen auch zusammen mit unterschiedlichen Mengen an niedermolekularen, isocyanatreaktiven Polyolen, Polyaminen oder Polymercaptanen eingesetzt werden. Als Verbindungen dieser Art kommen beispielsweise Ethylenglykol, Butandiol, Pentaerythrit, Trimethylolpropan, Ethylendiamin, Propylendiamin, Hexamethylendiamin in Frage.

Als weiterer Baustein für die Herstellung der erfindungsgemäßen Polyurethan-Dispersionen werden niedermolekulare Polyole, vorzugsweise Diole, eingesetzt, die weiterhin noch eine ionische Gruppe in Form der Carbonsäure-, Phosphonsäure- oder Sulfonsäuregruppe enthalten. Beispiele für diese Gruppe von Monomeren sind α-C₂-C₁₀-Bis-hydroxycarbonsäuren wie z.B. Dihydroxypropionsäure, Dimethylolpropionsäure, Dihydroxyethylpropionsäure, Dimethylolbuttersäure, Dihydroxybernsteinsäure, Dihydroxybenzoesäure oder 3-Hydroxy-2-hydroxymethylpropansulfonsäure, 1,4-Dihydroxybutansulfonsäure.

Diese Monomeren können vor der Umsetzung mit einem tertiären Amin wie beispielsweise Trimethylamin, Triethylamin, Dimethylanilin, Diethylanilin oder Triphenylamin neutralisiert, um eine Reaktion der Säuregruppe mit dem Isocyanat zu vermeiden. Ist die Wahrscheinlichkeit einer solchen Reaktion nur gering, können die Säuregruppen auch erst nach ihrem Einbau in das Polyurethan-Mikrogel neutralisiert werden. Die Neutralisation erfolgt dann mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylaminomethylpropanol, Dimethylisopropanolamin oder mit Ammoniak. Daneben kann die Neutralisation auch mit Mischungen aus Aminen und Ammoniak vorgenommen werden.

Beispiele für geeignete Polyisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatocyclophenyl)methan, 4,4'-Diisocyanatodiphenylether, 2,3-Bis-(8-isocyanatooctyl)-4-octyl-5-hexylcyclohexen, Tetramethylxylylendiisocyanate, Trimethylhexamethylendiisocyanate, Isocyanurate von obigen Diisocyanaten oder Allophanate von obigen Diisocyanaten. Gemische solcher Di- oder Polyisocyanate können ebenfalls eingesetzt werden.

Es ist von besonderer Bedeutung für die erfindungsgemäßen Polyurethan-Dispersionen, daß die Makromonomeren, die zu diesen Dispersionen führen, terminale Vinylgruppen enthalten. Der Begriff terminale Vinylgruppen soll solche Vinylgruppen bezeichnen, die am Anfang oder am Ende der Polymerkette hängen. Der Einbau von terminalen Vinylgruppen erfolgt in der Weise, daß ein Präpolymer, das durch Reaktion der Polyole und der Polyhydroxycarbon-, Polyhydroxyphosphon- oder Polyhydroxysulfonsäuren erhalten wurde und das freie Isocyanat-Gruppen enthält, mit einem Vinylmonomer der oben genannten Art umgesetzt wird, das eine gegenüber Isocyanatgruppen reaktive Gruppe enthält.

Die aus diesen Monomeren aufgebauten Makromonomeren können zusätzlich noch durch Einbau von Aminen, Alkoholen und/oder Thioalkoholen modifiziert werden. Hierzu wird das in der ersten Stufe erzeugte Zwischenprodukt, das terminale Isocyanatreste enthält, nicht allein mit dem Vinylmonomer umgesetzt, das eine isocyanat-reaktive Gruppe enthält, sondern dieses Monomer wird gemeinsam mit

Aminen, Alkoholen und/oder Thioalkoholen umgesetzt. Hierfür kommen beispielsweise in Frage primäre Amine wie Propylamin, Butylamin, Pentylamin, 2-Amino-2-methylpropanol, Ethanolamin, Propanolamin; sekundäre Amine wie Diethanolamin, Dibutylamin, Diisopropanolamin; primäre Alkohole wie Methanol, Ethanol, Propanol, Butanol, Hexanol, Dodecanol, Stearylalkohol; sekundäre Alkohole wie Isopropanol, Isobutanol und die entsprechenden Thioalkohole.

Die Herstellung der Zwischenprodukte in den ersten Stufen erfolgt nach den üblichen und in der Urethan-Chemie bekannten Methoden. Hierbei können als Katalysatoren tertiäre Amine, wie z.B. Triethylamin, Dimethylbenzylamin, Diazabicyclooctan sowie Dialkylzinn (IV)-Verbindungen, wie z.B. Dibutylzinndilaurat, Dibutylzinndichlorid, Dimethylzinndilaurat, eingesetzt werden. Die Reaktion findet ohne Lösemittel in der Schmelze, in Anwesenheit eines Lösemittels oder in Anwesenheit eines sogenannten Reaktivverdünners statt. Als Lösemittel kommen solche in Frage, die späterhin durch Destillation entfernt werden können, beispielsweise Dioxan, Methylethylketon, Methylisobutylketon, Aceton, Tetrahydrofuran, Toluol, Xylol. Diese Lösemittel können ganz oder teilweise nach der Herstellung der Polyurethan-makromonomeren oder nach der radikalischen Polymerisation abdestilliert werden. Daneben kann man die Reaktion auch in einem hochsiedenden, wasserverdünnbaren Lösemittel, zum Beispiel in N-Methylpyrrolidon, durchführen, das dann in der Dispersion verbleibt. Vor dem Dispergierprozeß können noch weitere Lösemittel, wie z.B. Glykolether und deren Ester zugesetzt werden. Geeignete Glykolether sind z.B. Butylglykol, Butyldiglykol, Methoxypropanol, Dipropylengylkolmonomethylether oder Digylkoldimethylether. Bei den Reaktivverdünnern handelt es sich um α, β-ungesättigte Monomere, die in der Endstufe mit den Vinylgruppen enthaltenden Makromonomeren copolymerisiert werden. Beispiele für solche Reaktivverdünner sind α, β-ungesättigte Vinylmonomeren wie Alkyl-acrylate, -methacrylate und - crotonate mit 1 bis 20 Kohlenstoffatomen im Alkylrest, Di-, Tri-, und Tetracrylate, -methacrylate, -crotonate von Glykolen, tri- und tetrafunktionellen Alkoholen, substituierte und unsubstituierte Acryl- und Methacrylamide, Vinylether, α, β-ungesättigte Aldehyde und Ketone, Vinylalkylketone mit 1 bis 20 Kohlenstoffatomen im Alkylrest, Vinylether, Vinylester, Diester von α, β-ungesättigten Dicarbonsäuren, Styrol, Styrolderivative, wie z.B. α-Methylstyrol.

Die so erhaltenen Zwischenprodukte der ersten Stufe werden dann ohne Zwischenisolierung unter den gleichen Bedingungen mit den isocyanat-reaktiven Vinylmonomeren umgesetzt, wobei hier neben den isocyanat-reaktiven Vinylmonomeren zusätzlich auch Amine, Alkohole oder Thioalkohole in Frage kommen wie bereits zuvor erwähnt. Die Mengenverhältnisse werden in jedem Fall so gewählt, daß alle Isocyanatgruppen in Urethan-, Thiourethan- bzw. Harnstoffgruppen umgewandelt werden.

Die so erhaltenen Makromonomere werden dann neutralisiert, falls die sauren Gruppen in den Monomeren, die solche Gruppen tragen, nicht bereits von vornherein in neutralisierter Form eingesetzt wurden. Die Neutralisation erfolgt dann mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylaminomethylpropanol, Dimethylisopropanolamin oder mit Ammoniak. Daneben kann die Neutralisation auch mit Mischungen aus Aminen und Ammoniak vorgenommen werden.

Zur Herstellung der erfindungsgemäßen Polyurethan-Dispersionen werden Makromonomeren, die Vinylgruppen enthalten, durch Zugabe von Wasser in eine wäßrige Dispersion überführt und nach an sich bekannten Methoden mit radikalbildenden Initiatoren polymerisiert. Bei dieser Polymerisation können, falls nicht von vornherein als sogenannte Reaktivverdünner vorhanden, Monomere dieser Art, wie zuvor beschrieben, in das Polyurethan einpolymerisiert werden. Weiterhin können unmittelbar vor oder während der radikalischen Polymerisation auch noch Carboxyl-, Hydroxyl-, Amino-, Ether- und Mercapto-funktionelle α, β-ungesättigte Vinylmonomeren zugegeben werden. Beispiele hierfür sind Hydroxylethyl(meth)acrylat, Hydroxypropyl(meth)acrylat, (Meth)acrylsäure, Crotonsäure, Glycidyl(meth)acrylat, t-Butylaminoethylmethacrylat oder Dimethylaminoethylmethacrylat. Der Gehalt an copolymerisierten Vinylmonomeren beträgt 0 bis 95 Gew.-%, bevorzugt 5 bis 70 Gew.-%, bezogen auf den Feststoff der Polyurethan-Dispersion. Das Verhältnis von Weich- und Hartsegmenten in den Polyurethan-Makromonomeren beträgt 0,30 bis 6, besonders bevorzugt von 0,8 bis 3. Als Initiatoren für die Polymerisation kommen die bekannten radikalbildenden Initiatoren in Frage wie Ammoniumperoxidisulfat, Kaliumperoxidsulfat, Natriumperoxidsulfat, Wasserstoffperoxid, organischen Peroxiden, wie z.B. Cumolhydroperoxid, t-Butylhydroperoxid, Di-tert.-Butylperoxid, Dioctylperoxid, tert.-Butylperpivalat, tert.-Butylperisononanoat, tert.-Butylperethylhexanoat, tert.-Butylperneodecanoat, Di-2-ethylhexylperoxydicarbonat, Diisotridecylperoxidicarbonat sowie Azoverbindungen, wie z.B. Azo-bis(isobutyronitril), Azo-bis(4-cyanovaleriansäure), oder die üblichen Redoxsysteme, z.B. Natriumsulfit, Natriumdithionit, Ascorbinsäure und organische Peroxide oder Wasserstoffperoxid. Außerdem können noch Regler (Mercaptane), Emulgatoren, Schutzkolloide und andere übliche Hilfsstoffe zugegeben werden.

Erfolgte die Herstellung des Makromonomers in einem abdestillierbaren Lösemittel, das entweder ein Azeotrop mit Wasser bildet oder aus wäßriger Phase fraktionierbar ist, beispielsweise in Aceton, Dioxan, Methylethylketon, Methylisobutylketon, Tetrahydrofuran, Toluol oder Xylol, so wird dieses Lösemittel aus der Dispersion abdestilliert. Man erhält in allen Fällen eine wäßrige Polyurethan-Dispersion.

Die Säurezahlen dieser Polyurethane liegen im Bereich von 5 bis 80, besonders bevorzugt im Bereich von 10 bis 40 Einheiten.

Weitere Einzelheiten zur Herstellung der Makromonomeren und deren Polymerisation zu den erfindungsgemäßen Polyurethan-Dispersionen ergeben sich aus den folgenden allgemeinen Verfahrensbeschreibungen. Diese Verfahrensbedingungen stellen bevorzugte Ausführungsformen dar.

### 1. Lösemittelfrei

### a. ohne Hilfslösemittel

Bei Temperaturen von 100 bis 150 °C, besonders bevorzugt von 120 bis 135 °C, werden die Polyhydroxysäure und gegebenenfalls niedermolekulare Polyole in einem Polyol mit einem mittleren Molekulargewicht von 400 bis 5000 gelöst und mit einem polyisocyanat oder Polyisocyanatmischungen zu einem OH-terminierten Produkt mit einem mittleren Molekulargewicht (Mn) von 500 bis 12000, besonders bevorzugt von 600 bis 8000, umgesetzt. Nach dem Abkühlen auf eine Temperatur von 30 bis 100 °C, besonders bevorzugt von 50 bis 80 °C, wird ein nicht isocyanatreaktives Comonomer zugegeben. Bei dieser Temperatur wird durch weitere Zugabe von Polyisocyanat ein NCO-terminiertes Harz aufgebaut, das anschließend mit einer monofunktionellen, NCO-reaktiven Vinylverbindung zu einem Polyurethanmakromonomeren mit einem mittleren Molekulargewicht von 700 bis 24000, besonders bevorzugt von 800 bis 16000, umgesetzt. Diese so erhaltene Harzlösung wird nach der Neutralisation mit Aminen oder anderen Basen in Wasser dispergiert. Zu der so erhaltenen Dispersion können noch weitere Vinyl-Comonomeren vor oder während der noch zu erfolgenden radikalischen Polymerisation gegeben werden. In der wäßrigen Dispersion wird dann mit radikalbildenden Initiatoren die freien Vinylverbindungen bei einer Temperatur von 0 bis 95 °C, besonders bevorzugt von 40 bis 95 °C, und bei Verwendung von Redoxsystemen bei einer Temperatur von 30 bis 70 °C polymerisiert. Dabei entsteht eine lösemittelfreie Polyurethan-Dispersion.

### b. mit Hilfslösemittel

Im Unterschied zu Verfahren 1.a. werden hier alle Polyol-Komponenten in einem aus der wäßrigen Phase fraktionierbaren bzw. mit Wasser ein Azeotrop bildendes lösemittel gelöst und direkt mit Polyisocyanat oder Polyisocyanatmischungen zum NCO-terminierten Produkt umgesetzt. Der Lösemittelgehalt beträgt 1 bis 80 Gew.-%, besonders bevorzugt zwischen 10 bis 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach der Umsetzung mit einer monofunktionellen, isocyanatreaktiven Vinylverbindung zu einem Polyurethan-Makromonomeren mit einem Molekulargewicht von 500 bis 30000, besonders bevorzugt von 700 bis 20000, wird mit Aminen oder anderen Basen neutralisiert und in Wasser dispergiert. Anschließend wird das Hilfslösemittel, eventuell unter leichtem Vakuum, aus der wäßrigen Phase destilliert. Zu dieser lösemittelfreien Dispersion können noch Vinyl-Comonomeren vor oder während der noch zu erfolgenden radikalischen Polymerisation gegeben werden. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 70 °C zu einer lösemittelfreien Polyurethan-Dispersion polymerisiert.

### 2. Lösemittelhaltig

Bei Benutzung eines nichtdestillierbaren Hilfslösemittels, wie zum Beispiel N-Methylpyrrolidon, wird genauso wie in Verfahren 1.b. vorgegangen, wobei aber nach dem Dispergieren die Destillation entfällt. Dabei können gegebenenfalls vor oder während der Polymerisation Vinylmonomere zugegeben werden können. Die Polymerisation wird wie in Verfahren 1.b. durchgeführt. Der Lösemittelgehalt liegt im Bereich von 0,1 bis 30 Gew.-%, besonders bevorzugt von 1 bis 15 Gew.-%, bezogen auf die gesamte Bindemittel-Dispersion.

Aufgrund ihres chemischen Aufbaus sind die erfindungsgemäßen Polyurethan-Dispersionen für eine vielseitige Anwendung geeignet, z.B. zur Herstellung von Beschichtungssystemen, unter anderem für die Beschichtung von Holz, als Bindemittel für wasserverdünnbare Klebstoffe oder als Harze für Druckfarben.

Sie sind kombinierbar und im allgemeinen verträglich mit anderen wäßrigen Kunststoffdispersionen und -lösungen, z.B. Acryl- und/oder Methacrylpolymerisaten, Polyurethan-, Polyharnstoff-, Polyester- sowie Epoxidharzen, Thermoplasten auf Basis von Polyvinylacetat, - vinylchlorid, -vinylether, -chloropren, -acrylnitril, Äthylen-Butadien-Styrol-Copolymerisaten. Sie lassen sich auch mit verdickend wirkenden Substanzen auf Basis von carboxylgruppenhaltigen Polyacrylaten bzw. Polyurethanen, Hydroxyethylcellulose, Polyvinylalkoholen sowie anorganischen Thixotropierungsmitteln, wie Bentonit, Natrium-Magnesium- und Natrium-Magnesium-Fluor-Lithium-Silikate, kombinieren.

Die erfindungsgemäßen Polyurethan-Dispersionen lassen sich auf die verschiedensten Substrate, z.B. Keramik, Holz, Glas, Beton, vorzugsweise Kunststoffe, wie Polycarbonat, Polystyrol, Polyvinylchlorid, Polyester, Poly(meth)acrylate, Acrylnitril-Butadien-Styrol-Polymerisate und dergleichen, sowie vorzugsweise Metall, wie Eisen, Kupfer, Aluminium, Stahl, Messing, Bronze, Zinn, Zink, Titan, Magnesium und dergleichen aufbringen. Sie haften auf den verschiedenen Unterlagen ohne haftvermittelnde Grundierungen bzw. Zwischenschichten.

Die erfindungsgemäßen Polyurethan-Dispersionen sind z.B. für die Herstellung von korrosionsschützenden Überzügen und/oder Zwischenbeschichtungen für die verschiedensten Anwendungsgebiete geeignet, insbesondere zur Herstellung von Metallic- und Unibasislacken in Mehrschicht-Lackaufbauten für die Gebiete der Automobil- und Kunststofflackierung und zur Erzeugung von Grundierungslacken für das Gebiet der Kunststofflackierung.

Aufgrund von kurzen Ablüftzeiten der auf den erfindungsgemäßen Polyurethan-Dispersionenn basierenden Basislacke kann die pigmentierte Basislackschicht ohne Einbrennschritt (Naß-in Naß-Verfahren) mit einem Klarlack überlackiert und anschließend zusammen eingebrannt oder forciert getrocknet werden. Basislacke, hergestellt mit den erfindungsgemäßen Polyurethan-Dispersionenn, liefern weitgehend unabhängig von der Einbrenn- bzw. Trocknungstemperatur Lackfilme gleicher Qualität, so daß sie sowohl als Reparaturlack von Kraftfahrzeugen als auch als Einbrennlack bei der Serienlackierung von Kraftfahrzeugen eingesetzt werden können. In beiden Fällen resultieren Lackfilme mit einer guten Haftung auch auf der Originallackierung und mit einer guten Beständigkeit gegenüber Schwitzwasser. Weiterhin wird die Brillanz der Lackschicht nach einem Schwitzwassertest nicht nennenswert verschlechtert.

Bei der Formulierung von wasserverdünnbaren Lacken mit den erfindungsgemäßen Polyurethan-Dispersionenn können die in der Lackindustrie üblichen Vernetzer, wie z.B. wasserlösliche oder - emulgierbare Melamin- oder Benzoguanaminharze, Polyisocyanate oder Präpolymeren mit endständigen Isocyanatgruppen, wasserlösliche oder - dispergierbare Polyaziridine und blockierte Polyisocyanate zugesetzt werden. Die wäßrigen Beschichtungssysteme können alle bekannten und in der Lacktechnologie üblichen Pigmente bzw. Farbstoffe, die anorganischer oder organischer Natur sein können, sowie Netzmittel, Entschäumer, Verlaufsmittel, Stabilisatoren, Katalysatoren, Füllstoffe, Weichmacher und Lösemittel enthalten.

Die erfindungsgemäßen Polyurethan-Dispersionen können auch unmittelbar zum Verkleben beliebiger Substrate verwendet werden. Zur Erzielung von speziellen Klebeeigenschaften können die erfindungsgemäßen Polyurethan-Dispersionen mit anderen Kunststoffdispersionen oder -lösungen (siehe oben) abgemischt werden. Ferner können zur Verbesserung der Wärmestand- und Schälfestigkeit Vernetzer, wie z.B. Polyisocyanate oder Präpolymere mit terminalen Isocyanatgruppen, wasserlösliche oder -emulgierbare Melamin- oder Benzoguanaminharze zugesetzt werden.

Die auf den erfindungsgemäßen Polyurethan-Dispersionen basierenden Klebstoffe können die in der Klebstofftechnologie üblichen Zusatzstoffe, wie Weichmacher, Lösungsmittel, Filmbindehilfsmittel, Füllstoffe, synthetische und natürliche Harze enthalten. Sie eignen sich speziell zur Herstellung von Verklebungen von Substraten in der Kraftfahrzeugindustrie, z.B. Verklebung von Innenausbauteilen, und in der Schuhindustrie, z.B. zum Verkleben von Schuhsohle und Schuhschaft. Die Herstellung und Verarbeitung der auf den erfindungsgemäßen Polyurethan-Dispersionenn basierenden Klebstoffe erfolgt nach den üblichen Methoden der Klebetechnologie, die bei wäßrigen Dispersions- und Lösungsklebstoffen angewendet werden.

### Beispiel 1:

258,4 g eines Polyesters, hergestellt aus Hexandiol-1,6, Isophthal- und Adipinsäure, mit einer Hydroxylzahl von 84 und einer Säurezahl unter 4 werden zusammen mit 23,3 g Dimethylolpropionsäure und 0,4 g Hexandiol-1,6 auf 130 °C erhitzt und bei dieser Temperatur gehalten, bis eine homogene Lösung vorliegt. Anschließend werden über einen Zeitraum von 15 bis 20 Minuten 57,3 g Tetramethylxylylendiisocyanat unter Rühren zudosiert und weiter bei 130 °C so lange gerührt, bis keine freien Isocyanatgruppen mehr vorliegen.

Nach Abkühlung auf 70 °C werden eine Lösung, bestehend aus 80,0 g Methylmethacrylat und 0,1 g 2,6-Di-tert.-butyl-4-methylphenol rasch zugegeben und homogenisiert. Anschließend werden 62,9 g Tetramethylxylylendiisocyanat über einen Zeitraum von 15 Minuten zugegeben und bei 70 °C umgesetzt, bis der Gehalt an freien Isocyanatgruppen 2,12 Gew.-%, bezogen auf die Gesamteinwaage, beträgt. Danach werden rasch 93,7 g eines Umsetzungsproduktes von Versaticsäureglycidylester mit Methacrylsäure über einen Zeitraum von 15 Minuten zudosiert. Es wird weiter bei einer Temperatur von 70 °C umgesetzt, bis keine freien Isocyanatgruppen mehr vorliegen. Nach Zugabe von 12,4 g Triethylamin wird 5 Minuten homogenisiert. Anschließend werden 1135 g Wasser mit einer Temperatur von 95 °C zu der Präpolymer-Lösung unter intensivem Rühren gegeben. Nach Abkühlung auf 80 °C wird eine weitere Stunde gerührt. Zu der so hergestellten Dispersion werden 10 Vol-% einer Ammoniumperoxodisulfat-Lösung, bestehend aus 0,8 g Ammoniumperoxodisulfat und 50 g Wasser, bei 80 °C zugegeben. Die restliche Menge der Ammoniumperoxodisulfat-Lösung wird über einen Zeitraum von 30 Minuten dosiert.

Anschließend wird die Temperatur für weitere 2 Stunden bei 78 bis 80 °C gehalten.

Nach Abkühlung auf Raumtemperatur wird die Dispersion durch ein 5 µm Filter filtriert. Die so erhaltene Dispersion besitzt einen Festkörpergehalt von 32,3 % und einen pH-Wert von 7,50.

### Beispiel 2:

282,8 g eines Polyesters, hergestellt aus Neopentylglykol, Hexandiol-1,6, Isophthal- und Adipinsäure, mit einer Hydroxylzahl von 37 und einer Säurezahl unter 3 werden zusammen mit 28,0 g Dimethylolpropionsäure und 3,3 g Butandiol-1,4 in 150 g Aceton unter Rückfluß gelöst. Anschließend werden über einen Zeitraum von 45 - 60 Minuten 112,0 g 4,4-Dicyclohexylmethandiisocyanat zudosiert und bei Rückflußtemperatur so lange gerührt, bis der Gehalt an freien Isocyanatgruppen 1,29 Gew.-%, bezogen auf die Gesamteinwaage, beträgt.

In die so erhaltene Präpolymer-Lösung werden dann 0,1 g 2,6-Di-tert.-butyl-4-methylphenol und 67,8 g eines Umsetzungsprodukts von Versaticsäureglycidylester mit Methacrylsäure gegeben. Es wird weiter bei Rückflußtemperatur umgesetzt, bis keine freien Isocyanatgruppen mehr vorliegen. Nach Zugabe von 18,0 g Triethylamin werden 1108 g Wasser mit einer Temperatur von 80 °C zu der Polymerlösung unter intensivem Rühren gegeben. Das Lösemittel Aceton wird anschließend durch Vakuumdestillation von der erhaltenen Dispersion abgetrennt. Nach Zugabe von 80,0 g Methylmethacrylat wird die Temperatur auf 80 °C erhöht und weitere 30 Minuten gerührt. Anschließend werden 10 Vol-% einer Ammoniumperoxodisulfat-Lösung, bestehend aus 1,0 g Ammoniumperoxodisulfat und 50 g Wasser, bei 80 °C zugegeben. Die restliche Menge der Ammoniumperoxodisulfat-Lösung wird über einen Zeitraum von 30 Minuten dosiert. Die Temperatur wird für weitere 2 Stunden bei 78 bis 80 °C gehalten.

Nach Abkühlung auf Raumtemperatur wird die Dispersion auf einen Festkörpergehalt von 30 % eingestellt und durch ein 5 µm Filter filtriert. Die resultierende Dispersion besitzt einen pH-Wert von 7,25.

### Beispiel 3:

282,8 g eines Polyesters, hergestellt aus Hexandiol-1,6, Isophthal- und Adipinsäure, mit einer Hydroxylzahl von 84 und einer Säurezahl unter 4 werden zusammen mit 28,0 g Dimethylolpropionsäure und 0,7 g Butandiol-1,4 in 105,0 g N-Methylpyrrolidon bei 70 °C gelöst. Anschließend werden über einen Zeitraum von 25 bis 30 Minuten 114,5 g Isophorondiisocyanat unter Rühren zudosiert und weiter bei 70 °C so lange gerührt, bis der Isocyanatgehalt 1,40 Gew.-%, bezogen auf die Gesamteinwaage, beträgt.
Zu der so erhaltenen Präpolymer-Lösung werden 67,8 g eines Umsetzungsprodukts von Versaticsäureglycidylester und Methacrylsäure sowie 0,1 g 2,6-Di-tert.-butyl-4-methylphenol rasch zugegeben und homogenisiert. Es wird weiterhin bei 70 °C umgesetzt, bis keine freien Isocyanatgruppen mehr vorliegen. Nach Zugabe von 17,0 g Triethylamin wird 5 Minuten homogenisiert. Anschließend werden 1022 g Wasser mit einer Temperatur von 95 °C zu der Präpolymer-Lösung unter intensivem Rühren gegeben. Nach Abkühlung auf 80 °C werden 80,0 g Methylmethacrylat zugegeben und weitere 60 Minuten gerührt. Zu der so erhaltenen Dispersion werden 10 Vol-% einer Ammoniumperoxodisulfat-Lösung, bestehend aus 1,0 g Ammoniumperoxodisulfat und 50 g Wasser, bei 80 °C zugegeben. Die restliche Menge der Ammoniumperoxodisulfat-Lösung wird über einen Zeitraum von 30 Minuten dosiert.

Anschließend wird die Temperatur für weitere 2 Stunden bei 78 bis 80 °C gehalten. Nach Abkühlung auf Raumtemperatur wird die Dispersion durch ein 5 νm Filter filtriert. Die resultierende Dispersion besitzt einen Festkörpergehalt von 33,3 % und einen pH-Wert von 7,35.

Das bei den Beispielen 1 bis 3 benutzte Umsetzungsprodukt von Versaticsäureglycidylester mit Methacrylsäure wurde wie folgt hergestellt:
784,5 g Versaticsäureglycidylester werden mit 258,3 g Methacrylsäure, 0,2 g 2,6-Di-tert.-butyl-4-methylphenol und 1,04 g AMC-2 (Chromoctanoat) bei RT homogenisiert. Anschließend wird bei einer Temperatur von 90 °C umgesetzt, bis die Säurezahl kleiner 1 und das Epoxid-Äquivalentgewicht größer 10.000, bezogen auf die Gesamteinwaage, beträgt.

### Beispiel 4:

286 g eines Poly(butandioladipiat)es (OH-Zahl: 45) wird zusammen mit 23,1 g Dimethylolpropionsäure auf 130 °C erwärmt und bei dieser Temperatur mit 30 g Toluylendiisocyanat umgesetzt. Nach Abkühlen auf 65-70 °C wird die Mischung zusammen mit 4,7 g Hexandiol-1,6 in 50 g stabilisiertem Methylmethacrylat gelöst und bei 65-70 °C mit 40,6 g Toluylendiisocyanat umgesetzt. Das Produkt wird mit der dem freien NCO-Gehalt entsprechenden molaren Menge des Additionsprodukts aus Versaticsäureglycidylester mit Methacrylsäure umgesetzt. Anschließend wird mit 12,7 g Triethylamin neutralisiert und mit 683 g entionisiertem Wasser dispergiert. Zu dieser Dispersion wird bei 80 °C 50 g einer 2 Gew.-%-igen wäßrigen Lösung von Ammoniumperoxodisulfat zudosiert und nachgerührt. Die erhaltene Dispersion weist einen Feststoffgehalt von 40 Gew.-%, einen pH-Wert von 7,2 und eine dynamische Viskosität von 9 mPas auf.

## Patentansprüche

1. Polyurethan-Dispersionen hergestellt durch radikalisch initiierte Polymerisation von Polyurethan-Makromonomeren mit einem Gehalt an Carboxyl-, Phosphonsäure- oder Sulfonsäuregruppen, terminalen Vinylgruppen, sowie gegebenenfalls Urethan-, Thiourethan- oder Harnstoffgruppen, wobei sich die terminalen Vinylgruppen nicht von Hydroxy-C₂-C₄-alkyl(meth)acrylaten herleiten.

2. Polyurethan-Dispersionen nach Anspruch 1, hergestellt durch Polymerisation von Carboxyl-, Phosphonsäure- oder Sulfonsäuregruppen sowie terminale Vinylgruppen, und gegebenenfalls Urethan-, Thiourethan- oder Harnstoffgruppen enthaltenden Polyurethan-Makromonomeren, erhalten durch Polyaddition von Polyhydroxy-polyethern, Polyhydroxy-polyestern oder Polyhydroxy-polycarbonaten, Polyhydroxycarbonsäuren, Polyhydroxyphosphonsäuren oder Polyhydroxysulfonsäuren und Polyisocyanaten und anschließende Umsetzung mit einem Monomer, das außer mindestens einer Vinylgruppe noch eine Gruppe enthält, die mit Isocyanatgruppen reagiert, wobei Hydroxy-C₂-C₄-alkyl(meth)acrylate ausgenommen sind, gegebenenfalls zusammen mit primären oder sekundären Aminen, Alkoholen oder Thioalkoholen.

3. Polyurethan-Dispersionen nach Anspruch 1, hergestellt durch radikalisch initiierte Polymerisation in einem Gemisch aus Wasser und einem gegenüber Isocyanatgruppen inerten organischen Lösemittel, gegebenenfalls in Anwesenheit von mit den Polyurethan-Makromonomeren copolymerisierbaren ungesättigten Monomeren, und gegebenenfalls Abdestillation des organischen Lösemittels vor oder nach der radikalischen Polymerisation.

4. Polyurethan-Dispersionen nach Anspruch 1, dadurch gekennzeichnet, daß die Polyhydroxy-polyether, Polyhydroxy-polyester oder Polyhydroxy-polycarbonate, Carboxyl-, Phosphonsäure- oder Sulfonsäuregruppen enthalten können.

5. Polyurethan-Dispersionen nach Anspruch 1, hergestellt durch radikalisch initiierte Polymerisation in einem als Lösemittel dienenden, mit den Polyurethan-Makromonomeren copolymerisierbaren ungesättigten Monomeren, gegebenenfalls in Gegenwart weiterer copolymerisierbarer ungesättigter Monomeren.

6. Verwendung der Polyurethan-Dispersionen nach Anspruch 1 zur Herstellung von Überzügen auf Substrate, als Klebemittel oder als Bindemittel in Druckfarben.

7. Verwendung der Polyurethan-Dispersionen nach Anspruch 1 zur Herstellung von Metallic- und Unibasislacken in Mehrschichtlackaufbauten.

## Patentansprüche (Patentansprüche für folgende(n) Vertragsstaat(en): ES)

1. Verfahren zur Herstellung von Polyurethan-Dispersionen, dadurch gekennzeichnet, daß man ein Polyurethan-Makromonomer mit einem Gehalt an Carboxyl-, Phosphonsäure- oder Sulfonsäuregruppen, terminalen Vinylgruppen, sowie gegebenenfalls Urethan-, Thiourethan- oder Harnstoffgruppen, wobei sich die terminalen Vinylgruppen nicht von Hydroxy-C₂-C₄-alkyl(meth)acrylaten herleiten, mit radikalbildenden Initiatoren polymerisiert.

2. Verfahren nach Anspruch 1, dadurch gekennzeichnet, daß man ein Polyurethan-Makromonomer, das Carboxyl-, Phosphonsäure- oder Sulfonsäuregruppen sowie terminale Vinylgruppen, und gegebenenfalls Urethan-, Thiourethan- oder Harnstoffgruppen enthält, durch Polyaddition von Polyhydroxy-polyethern, Polyhydroxy-polyestern oder Polyhydroxy-polycarbonaten, Polyhydroxycarbonsäuren, Polyhydroxyphosphonsäuren oder Polyhydroxysulfonsäuren und Polyisocyanaten herstellt und anschließend dieses Makromonomer mit einem Monomer umsetzt, das außer mindestens einer Vinylgruppe noch eine Gruppe enthält, die mit Isocyanatgruppen reagiert, gegebenenfalls zusammen mit primären oder sekundären Aminen, Alkoholen oder Thioalkoholen, und abschließend mit radikalbildenden Initiatoren polymerisiert.

3. Verfahren nach Anspruch 1, dadurch gekennzeichnet, daß man die Polymerisation mit den radikalbildenden Initiatoren in einem Gemisch aus Wasser und einem gegenüber Isocyanatgruppen inerten organischen Lösemittel, gegebenenfalls in Anwesenheit von mit den Polyurethan-Makromonomeren copolymerisierbaren ungesättigten Monomeren durchführt und gegebenenfalls das organische Lösemittel vor oder nach der radikalischen Polymerisation abdestilliert.

4. Verfahren nach Anspruch 1, dadurch gekennzeichnet, daß man als Ausgangsverbindungen solche Polyhydroxy-polyether, Polyhydroxy-polyester oder Polyhydroxy-polycarbonate nimmt, die Carboxyl-, Phosphonsäure- oder Sulfonsäuregruppen enthalten können.

5. Verfahren nach Anspruch 1, dadurch gekennzeichnet, daß man die radikalisch initiierte Polymerisation in einem als Lösemittel dienenden, mit den Polyurethan-Makromonomeren copolymerisierbaren ungesättigten Monomeren, gegebenenfalls in Gegenwart weiterer copolymerisierbarer ungesättigter Monomeren, durchführt.

6. Verwendung der Polyurethan-Dispersionen, hergestellt nach Anspruch 1 zur Herstellung von Überzügen auf Substrate, als Klebemittel oder als Bindemittel in Druckfarben.

7. Verwendung der Polyurethan-Dispersionen, hergestellt nach Anspruch 1 zur Herstellung von Metallic- und Unibasislacken in Mehrschichtlackaufbauten
